# Europäisches Patentamt
# European Patent Office
# Office européen des brevets

(19)

(11) Veröffentlichungsnummer: **0 043 091**
**B1**

(12)

# EUROPÄISCHE PATENTSCHRIFT

(45) Veröffentlichungstag der Patentschrift: 07.05.86

(51) Int. Cl.⁴: **B 01 F 3/08**

(21) Anmeldenummer: **81104856.0**

(22) Anmeldetag: **23.06.81**

(54) Verfahren zur Herstellung von Öl/Wasser-Emulsionen.

(30) Priorität: **01.07.80 DE 3024870**

(43) Veröffentlichungstag der Anmeldung:
**06.01.82 Patentblatt 82/01**

(45) Bekanntmachung des Hinweises auf die
Patenterteilung:
**07.05.86 Patentblatt 86/19**

(84) Benannte Vertragsstaaten:
**AT BE CH DE FR GB IT LI LU NL SE**

(56) Entgegenhaltungen:
**FR-A-1 536 557**
**FR-A-2 333 562**
**US-A-2 125 245**
**US-A-2 312 639**
**US-A-4 068 830**

(73) Patentinhaber: **Th. Goldschmidt AG**
**Goldschmidtstrasse 100 Postfach 101461**
**D-4300 Essen 1 (DE)**

(72) Erfinder: **Körner, Götz, Dr.**
**Kantorie 126**
**D-4300 Essen (DE)**
Erfinder: **Sänger, Gerd, Dr. Ing.**
**Sengenholzer Weg 12**
**D-5628 Heiligenhaus-Isenbügel (DE)**
Erfinder: **Fink, Hans-Ferdi**
**Brasserstrasse 46**
**D-4300 Essen 1 (DE)**
Erfinder: **Grassmann, Friedhelm**
**Bandelstrasse 23**
**D-4300 Essen (DE)**

Courier Press, Leamington Spa, England.

EP 0 043 091 B1

**Beschreibung**

Die Erfindung betrifft ein Verfahren zur Herstellung feinteiliger, stabiler Emulsionen vom Typ Öl/Wasser. Bei der Herstellung von Emulsionen des Typs Öl/Wasser ist es üblich, den Emulgator in der öligen Phase zu verteilen und das Wasser in diese Verteilung langsam einzurühren. Dabei bildet sich in der Regel zunächst eine meist viskose Emulsion vom Typ Wasser/Öl, die bei weiterer Zufuhr von Wasser zu einer Öl/Wasser-Emulsion invertiert.

Verwendet man als Emulgator bzw. als ölige Phase Substanzen, die bei Zimmertemperatur pastös bis fest sind, empfiehlt es sich, die Emulgatoren und/oder die öligen Phase bis zur Erzielung einer niedrigen Viskosität zu erwärmen. In diesen Fällen wird auch das zur Bildung der Emulsion benötigte Wasser zu der vorgelegten Verteilung des Emulgators oder der öligen Phase heiß zugegeben. Die entstehende und/oder die erhaltene Emulsion kann dabei einer Homogenisier- oder Emulgiermaschine zugeführt werden, um die Bildung gleichmäßiger, feinteiliger Emulsionen zu fördern. Häufig wird jedoch auch beobachtet, daß bei Verwendung zu intensiver Rührvorrichtungen der gegenteilige Effekt, nämlich eine Teilchenvergrößerung, eintreten kann.

Sehr häufig bereitet es jedoch Schwierigkeiten, feinteilige, gleichmäßige, lagerstabile Öl/Wasser-Emulsionen herzustellen, wenn man die Menge des verwendeten Emulgators oder Emulgatorengemisches verringert oder wenn man ölige Phasen verwendet, die schwierig zu emulgieren sind. Typische Beispiele schwierig zu emulgierender öliger Phasen sind siliciumorganische Verbindungen. Man benötigt hierfür häufig größere Mengen Emulgator, um feinteilige, gleichzeitig stabile und verdünnbare Emulsionen zu erhalten. Da sich der Emulgator aber zumindest zu einem Teil in der öligen Phase anreichert, werden hierdurch die Eigenschaften der öligen Phase beeinflußt. Siliconölemulsionen werden häufig zu Zwecken der Hydrophobierung verwendet. Hohe Anteile an Emulgator stören diese Verwendbarkeit. Auch bestimmte Wachse, wie z.B. Säurewachse, Esterwachse, Paraffinwachse, die zum Hydrophobieren oder als Gleit- und Trennmittel verwendet werden, müssen in der Regel aus diesem Grunde emulgatorarm emulgiert werden. Auch hier bereitet die Herstellung feinteiliger, stabiler, wasserverdünnbarer Emulsionen häufig Schwierigkeiten.

In der FR—A—2 333 562 ist ein Verfahren zur Herstellung beständiger, wäßriger Emulsionen wasserunlöslicher Substanzen beschrieben, wobei man eine Mischung aus 2 bis 30 Gew.-%, bevorzugt 8 bis 20 Gew.-%, insbesondere 10 bis 18 Gew.-%, Emulgator, bezogen auf wasserunlösliche Substanz, und 2 bis 25 Gew.-%, bevorzugt 6 bis 18 Gew.-%, insbesondere 6 bis 14 Gew.-%, Wasser, bezogen auf wasserunlösliche Substanz, vorlegt, mit der Maßgabe, daß die Wassermenge das 0,4- bis 1,7-fache der Emulgatormenge ausmacht, dann als wasserunlösliche Substanz eine niedrig- bis mittelviskose Substanz oder eine Mischung solcher Substanzen langsam stufenweise zufügt und das Gemisch während der Zugabe der wasserunlöslichen Substanz starken Scherkräften unterwirft, wobei die Einwirkung der starken Scherkräfte fortgesetzt wird, bis eine gelartige homogene Masse entstanden ist, die anschließend gegebenenfalls mit Wasser verdünnt wird. Dabei wird der Bildung der hochkonzentrierten gelartigen Stammemulsion die besondere Aufmerksamkeit gewidmet. Über die Arbeitsweise zur Auflösung des Geles werden keine besonderen Angaben gemacht. Als Vorrichtungen zur Verdünnung werden jedoch u.a. Kolloidmühlen genannt und in den Beispielen verwendet. Somit erfolgt auch die Verdünnung der gelartigen Stammemulsionen unter Anwendung hoher Scherkräfte. Es hat sich dabei jedoch gezeigt, daß die erhaltenen verdünnten Emulsionen noch zu instabil sind, um den Anforderungen der Praxis zu entsprechen. Dies zeigt sich insbesondere bei Erwärmung der Emulsion auf 40°C (Wärmetest) und im Zentrifugentest.

Es ist ferner beteits bekannt, zur Herstellung von Dispersionen besonders ausgestaltete Vorrichtungen zu verwenden. So ist in der US—A—2 125 245 eine Emulgiervorrichtung beschrieben, welche im wesentlichen aus einem Rohr besteht, welches durch mehrere Lockscheiben in einzelne Kammern aufgeteilt ist. Wird eine Wasser/Emulgator-Lösung und ein mit der Lösung nicht mischbarer Kohlenwasserstoff, z.B. Paraffin, gemeinsam durch das Rohr gepumpt, erhält man Dispersionen, die allerdings weder besonders feinteilig noch über die Maßen lagerstabil sind. In der US—A—2 312 639 ist eine Vorrichtung beschrieben, welche zur Auflösung von insbesondere hochmolekularen Verbindungen in Lösungsmitteln dient. Auch hier bedient man sich mehrerer Lochscheiben zur intensiven Durchmischung der Phasen. Zur Emulgierung ist die Vorrichtung nicht geeignet.

Von diesem Stand der Technik ausgehend liegt der Erfindung die Aufgabe zugrunde, ein Verfahren zu finden, das die Herstellung feinteiliger, stabiler und thermisch belastbarer verdünnter Emulsionen ermöglicht.

Überraschenderweise gelingt dies dadurch, daß man

a) die zum Erhalt einer stabilen Emulsion benötigte Menge Emulgator in, bezogen auf das Gewicht des Emulgators, der 0,5 fachen bis 3 fachen Gewichtsmenge Wasser verteilt,

b) in diese Verteilung die zu emulgierende Menge der öligen Phase einträgt und unter Einwirkung hoher Scherspannungen bis zur Bildung eines gleichmäßigen Geles homogenisiert,

c) das erhaltene Gel durch eine Lochscheibe, welche eine Mehrzahl von Löchern eines Durchmessers <10 mm aufweist, in die restliche Menge Wasser einpreßt und die dabei entstehende Emulsion unter Vermeidung hoher Scherspannungen bis zur vollständigen Auflösung der Gelteilchen rührt.

Im Verfahrensschritt a) wird zunächst die in Vorversuchen ermittelte, zum Erhalt einer stabiler

2

## 0 043 091

Emulsion benötigte Menge Emulgator in einer geringen Menge Wasser verteilt. Es hat sich dabei gezeigt, daß man, bezogen auf eine Gewichtseinheit Emulgator, die 0,5 fache bis 3 fache Wassermenge verwenden soll. Vorzugsweise wird die 1- bis 2-fache Wassermenge verwendet. Besonders bevorzugt verwendet man etwa gleiche Mengen Emulgator und Wasser. Ist der Emulgator oder das verwendete Emulgatorengemisch · bei Raumptemperatur fest oder pastös, empfiehlt es sich, zur besseren Verteilung dieses Emulgators diesen zu erwärmen oder die zur Erzielung der Verteilung benötigte Menge Wasser anzuwärmen. Da man im Regelfalle nicht unter Anwendung von Druck arbeitet, ist die Obergrenze der Temperatur durch den Siedepunkt der wäßrigen Zubereitung gegeben. Bevorzugt ist ein Temperaturbereich von etwa 40 bis 80°C.

In die so erhaltene Zubereitung wird nun im Verfahrensschritt b) die Gesamtmenge der zu emulgierenden öligen Phase, gegebenenfalls bei erhöhter Temperatur, eingerührt. Gleichzeitig oder anschließend läßt man auf die Verteilung hohe Scherspannungen einwirken, wobei sich ein Gel bildet, das in den meisten Fällen klar durchsichtig bis kolloidial trüb anfällt und im allgemeinen thixotrope Eigenschaften hat.

Eine typische Vorrichtung zur Erzielung hoher Scherspannungen liegt bei einer Emulgiermaschine vor, bei der das zu homogenisierende Gut zwischen einen Rotor und einen Stator eingebracht wird. Die Umfangsgeschwindigkeit des Rotors soll etwa 15 bis 45 $m \cdot s^{-1}$ betragen. Der Abstand zwischen Rotor und Stator soll dabei etwa 0,05 bis 2 mm betragen.

Eine weitere Vorrichtung zur Erzielung hoher Scherspannungen ist dadurch gekennzeichnet, daß das zu emulgierende Gut durch einen engen Spalt unter hohem Druck gepreßt wird. Man arbeitet dabei mit einem Druck von 150 bis 500 bar. Die Spaltbreite hängt dabei von dem angewendeten Druck und der Viskosität des zu fördernden Gutes ab.

Eine weitere Möglichkeit, auf das zu homogenisierende Gut hohe Scherspannungen einwirken zu lassen, besteht in der Verwendung eines Walzenstuhles.

Weitere geeignete Vorrichtungen sind Zahnscheibenrührer. Die Umfangsgeschwindigkeit soll dabei 10 bis 30 $m \cdot s^{-1}$ betragen. Die hohen Scherspannungen ergeben sich dabei aus der hohen Viskosität des zu homogenisierenden Gutes.

Dieses im Verfahrensschritt b) entstandene gleichmäßige, thixotrope Gel läßt sich jedoch schlecht in der zur Bildung der gewünschten Emulsion benötigten restlichen Menge Wasser auflösen. Erzwingt man die Verteilung des Geles in Wasser durch entsprechende Rührvorrichtungen, erhält man meist ungleichmäßige Öl/Wasser-Emulsionen, welche einen erheblichen Anteil agglomerierter Teilchen enthalten, die aufrahmen und somit nicht lagerstabil sind.

Es ist deshalb ein wesentlicher Punkt des erfindungsgemäßen Verfahrens, daß in dem Verfahrensschritt c) das erhaltene viskose Gel in die restliche Menge Wasser mittels einer geeigneten Pumpe durch eine Lochscheibe gepreßt wird, welche eine Mehrzahl von Löchern eines Durchmessers von <10 mm aufweist. Beim Hindurchpressen des thixotropen Geles durch die Löcher verflüssigt sich dieses vermutlich vorübergehend, so daß die Verteilung der aus der Lochscheibe austretenden Gelstränge im restlichen Wasser zu tropfenförmigen Gebilden ermöglicht wird. Vorzugsweise weisen dabei die Löcher der Lochscheibe einen Durchmesser von 1 bis 3 mm auf. Das zur Bildung der gewünschten Emulsion notwendige Wasser, in welches das Gel durch die Lochscheibe gepreßt wird, wird im Gegensatz zum Verfahrensschritt b) unter Vermeidung hoher Scherspannungen gerührt. Die Rührung soll dabei lediglich der besseren Verteilung der Gelteilchen im Wasser dienen, die sich aufgrund der vergrößerten Oberfläche wesentlich leichter in der wäßrigen Phase auflösen.

Das erfindungsgemäße Verfahren wird anhand der folgenden Beispiele noch näher erläutert.

Vergleichsbeispiel 1 (nicht erfindungsgemäß)

In einem Rührwerkskessel mit 1000 l Nutzinhalt werden 350 kg Siliconöl mit einer Viskosität von 350 mPas bei 25°C, 25 kg Nonylphenolpolyglykolether mit einer 14 Ethylenoxid-Gruppen enthaltenden Polyglykolkette und 25 kg Nonylphenolpolyglykolether mit einer 3 Ethylenoxid-Gruppen enthaltenden Polyglykolkette eingefüllt. Die Mischung wird mit einer Zahnscheibe, welche eine Umfangsgeschwindigkeit von U=21 $m \cdot s^{-1}$ aufweist, 15 Minuten lang innig vermischt. Das Verhältnis von Rührscheibendurchmesser zu Kesseldurchmesser beträgt 0,33. Anschließend wird die zur Emulgierung benötigte Wassermenge von 600 kg mit einer Zugabegeschwindigkeit von 10 l/min unten den genannten Rührbedingungen eingearbeitet. Es entsteht zunächst eine sehr viskose Emulsion vom Typ Wasser/Öl, die, nachdem etwa 400 l Wasser eingebracht sind, in eine niedrigviskose Öl/Wasser-Emulsion umschlägt. Wenn die gesamte Wassermenge zugeflossen ist, wird die Emulsion noch 10 Minuten nachgerührt. Nach Abstellen des Rührers wird die Emulsion durch einmaliges Passieren eines Hochdruckhomogenisators (Manton Gaulin M3) bei einem Druch von 350 kg/cm$^2$ nachhomogenisiert. Die fertige Emulsion enthält 35 % Siliconöl.

Vergleichsbeispiel 2 (nicht erfindungsgeäß)

In einem Rührwerkskessel mit 1000 l Nutzinhalt werden 38,6 kg Nonylphenolpolyglykolether mit einer 14 Ethylenoxid-Gruppen enthaltenden Polyglykolkette und 38,6 kg Nonylphenolpolyglykolether mit einer 3 Ethylenoxid-Gruppen enthaltenden Polyglykolkette mit 77,2 kg Wasser gelöst. Das Lösen der Emulgatoren wird durch Rühren mit einer Zahnscheibe, die in das Gemisch eintaucht und die einen Bodenabstand von etwa 1/5 ihres Durchmessers aufweist, unterstützt. Nachdem die Emulgatoren homogen im Wasser verteilt

3

sind, läßt man während eines Zeitraumes von ca. 35 Minuten 540 kg Siliconöl mit einer Viskosität von 350 mPas bei 25°C zufließen. Während der Siliconölzugabe wird mit der Zahnscheibe, die ein Verhältnis zwischen Rührscheibendurchmesser und Kesseldurchmesser von 0,33 aufweist, gerührt. Die Umfangsgeschwindigkeit beträgt 21 m · s$^{-1}$. Es entsteht ein sehr hochviskoses, transparentes Gel. Wenn alles Siliconöl eingearbeitet ist, rührt man 10 Minuten nach. Das Gel enthält 77,7 % Siliconöl und 11,11 % Emulgator. Dieses Gel wird dann unter den oben genannten Rührbedingungen durch Zugabe von 308 kg Wasser auf einen Gehalt an Siliconöl und Emulgator von 61,5 % verdünnt. Die Wasserzugabe erfolgt zunächst mit einer Geschwindigkeit von ca. 5 l/min. und wird, wenn die Viskosität des Rührgutes soweit abgesunken ist, daß der gesamte Kesselinhalt umgewälzt wird, so erhöht, daß alles Wasses nach etwa 20 Minuten eingearbeitet ist. Nach Abstellen des Rührers wird diese konzentrierte Emulsion durch einmaliges Passieren eines Hochdruckhomogenisators bei einem Druck von 350 kg/cm² nachhomogenisiert. Die den Hochdruckhomogenisator verlassene Emulsion fließt in einen Rührkessel mit einem Nutzvolumen von 1750 l. Der Kessel ist mit einem dreistufigen Flügel-Rührer ausgerüstet. Das Rührflügel-: Kesseldurchmesser-Verhältnis beträgt 0,90. Wenn die gesamte homogenisierte Emulsion in den Verdünnungskessel gelange ist, wird der Flügel-Rührer eingeschaltet und auf eine Umfangsgeschwindigkeit von 1,2 m · s$^{-1}$ gebracht. Nun gibt man die zum Verdünnen der Emulsion auf 35 % Silicongehalt benötigten 540,5 kg Wasser mit einer Geschwindigkeit von ca. 30 l/min zu. Wenn alles Wasser eingeflössen ist, wird noch 10 Minuten nachgerührt.

Beispiel 3 (erfindungsgemäß)

In gleicher Weise wie im Beispiel 2 beschrieben, wird ein hochviskoses, transparentes, bezogen auf den Silicongehalt 77,7 %iges Gel hergestellt. Dieses Gel wird dann mit Hilfe einer geeigneten Kreiskolbenpumpe durch eine Rohrleitung mit einem Innendurchmesser von 5 cm, an der eine Lochscheibe, über deren Querschnitt gleichmäßig 50 Bohrungen mit einem Durchmesser von 2 mm verteilt sind, angebracht ist, in einen Rühkessel mit einem Nutzinhalt von 1750 l gepumpt. Die Lochscheibe ist so an der Rohrleitung angebracht, daß die entstehenden Gelstränge direkt in die Verdünnungswassermenge von 848,5 kg, eingeleitet werden. Gleichmäßig wird der Ansatz mit dem im Beispiel 2 beschriebenen Rührer, der mit einer Umfangsgeschwindigkeit von 1,2 m · s$^{-1}$ rührt, bewegt. Wenn die gesamte Paste während 15 Minuten eingepumpt ist, wird noch etwa 10 bis 15 Minuten nachgerührt. Nach dieser Zeit haben sich alle Gelteilchen gelöst und es entsteht eine feinteilige Emulsion.

Beispiel 4 (erfindungsgemäß)

In der im Beispiel 3 beschriebenen Weise wird zunächst ein transparentes, hochviskoses Gel hergestellt. Dieses wird mit Hilfe einer Kreiskolbenpumpe durch eine Lochscheibe, die sich von der in Beispiel 3 beschriebenen Scheibe dadurch unterscheidet, daß sie über ihren Querschnitt gleichmäßig verteilt 8 Bohrungen mit einem Durchmesser von 5 mm enthält, in den im Beispiel 3 beschriebenen Rührkessel gepumpt, in dem es unter denselben Bedingungen gelöst wird.

Beispiel 5 (erfindungsgemäß)

In einem Rührwerkskessel mit 1000 l Nutzinhalt, der mit einem langsam laufenden Rührer (Rührflügel:Kesseldurchmesser=0,9) bestückt ist, werden 38,6 kg Nonylphenolpolyglykolether mit 14 Ethylenoxid-Gruppen und 38,6 kg Nonylphenolpolyglykolether mit 3 Ethylenoxid-Gruppen in 77,2 kg Wasser gelöst. In diese Lösung werden 540 kg Siliconöl mit einer Viskosität von 350 mPas gegeben und 30 Minuten mit einer Umfangsgeschwindigkeit von 1,2 m · s$^{-1}$ gerührt. Es entsteht eine niederviskose Mischung, die zur Herstellung des in den Vorbeispielen beschriebenen sehr hochviskosen Geles mit Holfe einer Kreiskolbenpumpe durch eine nach dem Rotor-Stator-Prinzip arbeitende Homogenisiermaschine gepumpt wird. Der Rotor der Maschine hat einen Durchmesser von 120 mm und und rotiert mit einer Drehzahl von 3000 UPM, was einer Umfangsgeschwindigkeit von $\sim$19 m · s$^{-1}$ entspricht. Der wirksame Spalt zwischen Rotor und Stator beträgt $\sim$2 mm. Durch die Einwirkung der hohen Schergeschwindigkeit entsteht aus der relativ niederviskosen Vormischung ein sehr hochviskoses, transparentes Gel. Dieses wird über eine Rohrleitung mit 50 mm lichter Weite durch die im Beispiel 3 beschriebene Lochscheibe in einen mit 848,5 kg Wasser beschickten Mischkessel gepreßt und unter den ebenfalls im Beispiel 3 beschriebenen Bedingungen in eine feinteilige Emulsion überführt.

Die in den Beispielen 1 bis 5 hergestellten Emulsionen wurden.

1. mikroskopisch auf den Durchmesser der dispergierten Öltröpfchen nach bekannten Verfahren untersucht.

2. Zur Ermittlung der Lagerstabilität wurden folgende Kurzzeittests angewendet:

    a) Lagerung der Emulsionen bei 40°C,

    b) Zentrifugieren der Emulsionen.

Zu 2a)

Die Bestimmung der Wärmestabilität der Emulsionen bei 40°C wird wie folgt durchgeführt:

Trockene Standzylinder werden mit der zu untersuchenden Emulsion bis ca. 5 mm unter dem Ende des Normschliffes gefüllt und danach der Stopfen aufgesetzt. Die Sicherung des Stopfens erfolgt durch eine

# 0 043 091

Stahlfeder, die in die seitlich am Zylinder angebrachten Haken eingehängt wird und über den Stopfen gespannt wird.

Der Dampfraum über der Emulsion muß sehr knapp eingestellt sein, um Eindampfen an der Oberfläche, das zur Wirkstoffabscheidung führen kann (Koaleszenzkeime) soweit wie möglich zu vermeiden.

Die Standzylinder werden nun in ein Wasserbad, welches auf 40°C eingestellt ist, gebracht.

Die Proben werden in regelmäßigen Zeitabständen aus dem Bad genommen und auf sichtbare Veränderungen, z.B. Ölabscheidung, Aufrahmen oder Ausmagern, untersucht. Es wird die Zeit bis zum ersten Auftreten der ersten sichtbaren Veränderungen notiert. Die Proben können weiter im Wasserbad verbleiben, bis Aufrahmungen oder Phasentrennung eintreten.

Zu 2b)

Die Bestimmung der Zentrifugenstabilität der Emulsionen geschieht auf folgende Weise:

Trockene Zentrifugengläser werden mit der zu untersuchenden Emulsion genau bis zur 10 ml Marke gefüllt. Die Zentrifugengläser werden nun in die Reduziereinsätze gestellt, so daß beim Zentrifugieren keine Unwucht entsteht. Nötigenfalls muß eine Nachtarierung vorgenommen werden. Nach Schließung des Deckels wird die Umdrehungszahl langsam bis 4500 Umdrehungen/Minute gesteigert. Nach Erreichen von 4500 Umdrehungen/Minute wird genau 30 Minuten bei dieser Umdrehungszahl zentrifugiert. Nach Stillstand der Zentrifuge werden die Proben kurzzeitig der Zentrifuge entnommen und auf Ölabscheidung, Aufrahmen oder Ausmagern untersucht, ohne daß dabei die Emulsion bewegt (z.B. durch Schütteln) wird.

Die aufgerahmte und/oder abgesetzte Menge wird von der Skalierung abgelesen und notiert. Nun wird nochmals 30 Minuten zentrifugiert und die Abscheidung abgelesen. Man zentrifugiert dann weitere 60 Minuten, so daß die Abscheidungen nach 30, 60 und 120 Minuten festgestellt werden können. Die eventuell abgeschiedene obere und untere Phase wird in Prozent der eingesetzten Emulsionsmenge angegeben.

Die Ergebnisse dieser Teste sind in Tabelle 1 zusammengefaßt.

TABELLE 1

| | Emulsion nach Beispiel | Mittlerer Teilchen-durchmesser | Wärmetest bei 40°C | Zentrifugentest | |
| --- | --- | --- | --- | --- | --- |
| | | | | 30 min | 2 h |
| Vergleich | 1 | 5—6 µm | 48 h | 5/0 | 15/5 |
| | 2 | ca. 2 µm | ~110 h | 0/0 | 4/0 |
| erfindungs-gemäß | 3 | <1 µm | >240 h | 0/0 | 0/0 |
| | 4 | <1 µm | >240 h | 0/0 | 0/0 |
| | 5 | <1 µm | >240 h | 0/0 | 0/0 |

Vergleichsbeispiel 6 (nicht erfindungsgemäß)

In einem Rührwerkskessel mit 1000 l Nutzinhalt werden 46,3 kg eines ethoxilierten Fettsäureglycerids mit einen HLB-Wert von 17,4 und 30,9 kg eines ethoxilierten synthetischen Fettalkohols mit einem HLB-Wert von 11 mit 77,2 kg Wasser gelöst. Das Lösen der Emulgatoren wird durch Rühren mit einer Zahnscheibe, die in das Gemisch eintaucht und die einen Bodenabstand von etwa 1/5 ihres Durchmessers aufweist, unterstützt. Nachdem die Emulgatoren homogen im Wasser verteilt sind, läßt man während eines Zeitraumes von ca. 35 Minuten 540 kg Siliconöl mit einer Viskosität von 100000 mPas bei 25°C zufließen. Während der Siliconölzugabe wird mit der Zahnscheibe, die ein Verhältnis zwischen Rührscheibendurchmesser und Kesseldurchmesser von 0,33 aufweist, gerührt. Die Umfangsgeschwindig-keit beträgt 21 $m \cdot s^{-1}$. Es entsteht ein sehr hochviskoses, transparentes Gel. Wenn alles Siliconöl eingearbeitet ist, rührt man 10 Minuten nach. Das Gel enthält 77,7 % Siliconöl und 11,11 % Emulgator. Dieses Gel wird dann unter den oben genannten Ruhrbedingungen durch Zugabe von 308 kg Wasser auf einen Gehalt an Siliconöl und Emulgator von 61,5 % verdünnt. Die Wasserzugabe erfolgt zunächst mit einer Geschwindigkeit von ca. 5 l/min und wird, wenn die Viskosität des Rührgutes soweit abgesunken ist, daß der gesamte Kesselinhalt umgewälzt wird, so erhöht, daß alles Wasser nach etwa 20 Minuten eingearbeitet ist. Nach Abstellen des Rührers wird diese konzentrierte Emulsion durch einmaliges Passieren eines Hochdruckhomogenisators bei einem Druck von 350 kg/cm² nachhomogenisiert. Die den Hochdruckhomogenisator verlassende Emulsion fließt in einen Rührkessel mit einem Nutzvolumen von 1750 l. Der Kessel ist mit einen dreistufigen Flügel-Rührer ausgerüstet. Das Rührflügel-:Kesseldurchmesser-Verhältnis beträgt 0,90. Wenn die gesamte homogenisierte Emulsion in den Verdünnungskessel gelangt ist, wird der Rührer eingeschaltet und auf eine Umfangsgeschwindigkeit von 1,2 $m \cdot s^{-1}$ gebracht. Nun gibt man die zum Verdünnen der Emulsion auf 35 % Silicongehalt benötigten

5

540,5 kg Wasser mit einer Geschwindigkeit von ca. 30 l/min zu. Wenn alles Wasser eingeflossen ist, wird noch 10 Minuten nachgerührt.

Beispiel 7 (erfindungsgemäß)

In gleicher Weise wie im Beispiel 6 beschrieben, wird ein hochviskoses, transparentes, bezogen auf den Silicongehalt 77,7 %iges Gel hergestellt. Dieses Gel wird dann mit Hilfe einer geeigneten Kreiskolbenpumpe durch eine Rohrleitung mit einem Innendurchmesser von 5 cm, an der eine Lochscheibe, über deren Querschnitt gleichmäßig 50 Bohrungen mit einem Durchmesser von 2 mm verteilt sind, angebracht ist, in einen Rührkessel mit einem Nutzinhalt von 1750 l gepumpt. Die Lochscheibe ist so an der Rohrleitung angebracht, daß die entstehenden Gelstränge direkt in die Verdünnungswassermenge von 848,5 kg, eingeleitet werden. Gleichzeitig wird der Ansatz mit dem im Beispiel 2 beschriebenen Rührer, der mit einer Umfangsgeschwindigkeit von 1,2 m · s$^{-1}$ rührt, bewegt. Wenn die gesamte Paste während 15 Minuten eingepumpt ist, wird noch etwa 10 bis 15 Minuten nachgerührt. Nach dieser Zeit haben sich alle Gelteilchen gelöst und es entsteht eine feinteilige Emulsion.

Beispiel 8 (erfindungsgemäß)

In einem Rührwerkskessel mit 1000 l Nutzinhalt, der mit einem langsam laufenden Rührer (Rührflügel:Kesseldurchmesser=0,9) bestückt ist, werden 46,3 kg eines ethoxilierten Fettsäureglycerids mit einem HLB-Wert von 17,4 und 30,9 kg eines ethoxilierten synthetischen Fettalkohols mit einem HLB-Wert von 11 in 77,2 kg Wasser gelöst. In diese Lösung werden 540 kg Siliconöl mit einer Viskosität von 100000 mPas gegeben und 30 Minuten mit einer Umfangsgeschwindigkeit 1,2 m · s$^{-1}$ gerührt. Es entsteht eine niederviskose Mischung, die zur Herstellung des in den Vorbeispielen beschriebenen sehr hochviskosen Geles mit Hilfe einer Kreiskolbenpumpe durch eine nach dem Rotor-Stator-Prinzip arbeitende Homogenisiermaschine gepumpt wird. Der Rotor der Maschine hat einen Durchmesser von 120 mm und rotiert mit einer Drehzahl von 3000 UPM, was einer Umfangsgeschwindigkeit von $\sim$19 m · s$^{-1}$ entspricht. Der wirksame Spalt zwischen Rotor und Stator beträgt $\sim$2 mm. Durch die Einwirkung der hohen Schergeschwindigkeit entsteht aus der relativ niederviskosen Vormischung ein sehr hochviskoses, transparentes Gel. Dieses wird über eine Rohrleitung mit 50 mm lichter Weite durch die im Beispiel 3 beschriebene Lochscheibe in einen mit 848,5 kg Wasser beschickten Mischkessel gepreßt und unter den ebenfalls im Beispiel 3 beschriebenen Bedingungen in eine feinteilige Emulsion überführt.

## TABELLE 2

| | Emulsion nach Beispiel | Mittlerer teilchen-durchmesser | Wärmetest bei 40°C | Zentrifugentest | |
|---|---|---|---|---|---|
| | | | | 30 min | 2 h |
| Vergleich | 6 | 3—5 µm | $\sim$80 h | 1/4 | 3/4 |
| erfindungs-gemäß | 7 | 2—3 µm | >140 h | 0/0 | 0/0 |
| | 8 | 2—3 µm | >160 h | 0/0 | 0/0 |

Vergleichsbeispiel 9 (nicht erfindungsgemäß)

In einem Rührwerkskessel mit 1000 l Nutzinhalt werden 29,4 kg eines ethoxilierten Fettsäureglycerids mit einem HLB-Wert von 17,4 und 42,6 kg eines ethoxilierten Fettalkohols mit einem HLB-Wert von 4,9 in 180,0 kg Wasser gelöst. Das Lösen der Emulgatoren wird durch Rühren mit einer Zahnscheibe, die in das Gemisch eintaucht und einen Bodenabstand von 1/5 ihres Durchmessers aufweist, unterstützt. Außerdem wird während des Lösens zusätzlich die Mischung auf 85°C erwärmt. Nachdem die Emulgatoren homogen im Wasser verteilt sind, läßt man während eines Zeitraumes von ca. 35 Minuten 400,0 kg einer auf 85°C erwärmten Schmelze eines Paraffinwachses (Schmelzpunkt 52 bis 54°C) zufließen. Wärend der Paraffinzugabe wird mit der Zahnscheibe, die ein Rührscheiben-:Kesseldurchmesser-Verhältnis von 0,33 aufweist, gerührt. Die Umfangsgeschwindigkeit beträgt 16 m · s$^{-1}$. Während der ganzen Zeit wird die Temperatur des Rührgutes auf 85°C gehalten. Bei dieser Temperatur entsteht ein sehr hockviskoses, transparentes Gel. Wenn die gesamte Paraffinschmelze zugeflossen ist, rührt man noch 10 Minuten nach. Das Gel enthält 59,70 % Paraffin und 13,43 % Emulgator. Dieses Gel wird dann unter den oben beschriebenen Rührbedingungen durch Zugabe von 330,0 kg 85°C warmen Wassers auf einen Gehält von 49,0 % Paraffinwachs und Emulgator verdünnt. Die Wasserzugabe erfolgt anfangs mit einer Geschwindigkeit von 5 l/min. und wird, wenn die Viskosität des Rührgutes soweit abgesunken ist, daß der gesamte Kesselinhalt umgewälzt wird, so erhöht, daß alles Wasser nach etwa 30 Minuten eingearbeitet ist. Nach Abstellen des Rührers wird die ca. 85°C warme konsentrierte Emulsion durch einmaliges Passieren eines Hochdruckhomogenisators bei einem Druck von 300 kg/cm$^2$ homogenisiert und in einen mit 1000,0 kg 85°C warmen Wassers beschickten Rührwerkskessel mit 2000 l Nutzinhalt gegeben. Der Kessel ist mit einem Rührer bestückt, dessen Rührflügel-:Kesseldurchmesser-Verhältnis 0,90 beträgt. Der Rührer läuft mit einer

**0 043 091**

Umfangsgeschwindigkeit von 1,2 m · s⁻¹. Die Temperatur wird konstant bei 85°C gehalten. Wenn die gesamte homogenisierte konzentrierte Emulsion in den Verdünnungskessel eingebracht ist, rührt man noch 10 Minuten nach. Dann läßt man die 85°C warme Emulsion durch einen mit Wasser gekühlten Wärmeaustauscher fließen und kühl sie möglichst rasch auf eine Temperatur von ca. 30°C ab.

Beispiel 10 (erfindungsgemäß)

In einem Rührwerkskessel mit 1000 l Nutzinhalt, der mit einem langsam laufenden Rührer (Rührflügel:Kesseldurchmesser=0,9) bestückt ist, werden 29,4 kg eines ethoxilierten Fettsäureglycerids mit einem HLB-Wert von 17,4 und 42,6 kg eines ethoxilierten Fettalkohols mit einem HLB-Wert von 4,9 in 180,0 kg Wasser gelöst. Das Lösen wird durch Rühren mit dem Rührer, welcher mit einer Umfangsgeschwindigkeit von 1,2 m · s⁻¹ läuft, unterstützt. Außerdem wird während des Lösens zusätzlich die Mischung auf 85°C erwärmt. Nachdem die Emulgatoren homogen im Wasser verteilt sind, werden 400,0 kg einer auf 85°C erwärmten Schmelze eines Paraffinwachses (Schmelzpunkt 52 bis 54°C) während ca. 10 Minuten hinzugegeben. Während des Einlaufens der Wachsschmelze wird unverändert weitergerührt. Nach einer Gesamtrührzeit von 30 Minuten wird die entstandene mittelviskose, 85°C warme Mischung mit Hilfe einer Kreiskolbenpumpe durch eine nach dem Rotor-Stator-Prinzip arbeitende, auf 85°C vorgewärmte Homogenisiermaschine gepumpt. Der Rotor der Maschine hat einen Durchmesser von 120 mm und rotiert mit einer Drehzahl von 3000 UPM, was einer Umfangsgeschwindigkeit von ∿19 m · s⁻¹ entspricht. Der wirksame Spalt zwischen Rotor und Stator beträgt ∿2 mm. Durch die Einwirkung der hohen Schergeschwindigkeit entsteht aus der relativ niederviskosen Vormischung ein sehr hochviskoses, transparentes Gel, welches 59,70 % Paraffin und 13,43 % Emulgator enthält. Dieses Gel wird nun über eine auf 85°C erwärmte Rohrleitung mit 50 mm lichter Weite durch die in Beispiel 3 beschriebene Lochscheibe in einen mit 1330 kg 85°C warmen Wassers beschickten Rührkessel gepreßt. Die Rührbedingungen sind die gleichen wie in Beispiel 3 beschrieben. Der Kesselinhalt wird während der ganzen Zeit auf 85°C gehalten. Die auf diese Weise hergestellte feinteilige, warme Emulsion wird nun durch Passieren eines mit Wasser gekühlten Wärmeaustauschers auf eine Temperatur von ca. 30°C abgekühlt.

TABELLE 3

| | Emulsion nach Beispiel | Mittlerer teilchen- durchmesser | Wärmetest bei 40°C | Zentrifugentest | |
|---|---|---|---|---|---|
| | | | | 30 min | 2 h |
| Vergleich | 9 | 3—4 μm | ∿96 h | 2/0 | 4/2 |
| erfindungs- gemäß | 10 | 1—2 μm | >220 h | 0/0 | 0/0 |

**Patentanspruche**

1. Verfahren zur Herstellung feinteiliger, stabiler Emulsionen vom Typ Öl/Wasser, wobei man
   a) die zum Erhalt einer stabilen Emulsion benötigte Menge Emulgator in, bezogen auf das Gewicht des Emulgators, der 0,5 fachen bis 3 fachen Gewichtsmenge Wasser verteilt,
   b) in diese Verteilung die zu emulgierende Menge der öligen Phase einträgt und unter Einwirkung hoher Scherspannungen bis zur Bildung eines gleichmäßigen Geles homogenisiert,
   c) das erhaltene Gel durch eine Lochscheibe, welche eine Mehrzahl von Löchern eines Durchmessers <10 mm aufweist, in die restliche Menge Wasser einpreßt und die dabei entstehende Emulsion unter Vermeidung hoher Scherspannungen bis zur vollständigen Auflösung der Gelteilchen rührt.

2. Verfahren nach Anspruch 1, dadurch gekennzeichnet, daß man die Verfahrensschritte a) und b) bei erhöhten Temperaturen durchführt.

3. Verfahren nach Anspruch 1 oder 2, dadurch gekennzeichnet, daß man im Verfahrensschritt c) eine Lochscheibe verwendet, deren Löcher einen Durchmesser von 1 bis 3 mm aufweisen.

**Revendications**

1. Procédé pour la préparation d'émulsions stables finement divisées du type huile dans l'eau, dans lequel
   a) on disperse la quantité d'agent émulsionnant nécessaire à l'obtention d'une émulsion stable dans une quantité d'eau égale à 0,5 à 3 fois la quantité de l'agent émulsionnant,
   b) on introduit dans cette dispersion la quantité à émulsionner de la phase huileuse et on l'homogénéise sous l'action de contraintes de cisaillement élevées jusqu'à la formation d'un gel homogène,
   c) on enfonce dans la quantité restante d'eau le gel obtenu, à travers un disque perforé présentant une

7

majorité de trous de diamètre inférieur à 10 mm, et on agite l'émulsion obtenue, en l'absence de contraintes de cisaillement élevées, jusqu'à dissolution complète des particules de gel.

2. Procédé selon la revendication 1, caractérisé en ce qu'on procède aux étapes de procédé a) et b) à températures élevées.

3. Procédé selon la revendication 1 ou 2, caractérisé en ce qu'on utilise dans l'étape de procédé c) un disque perforé dont les trous ont un diamètre 1 à 3 mm.

**Claims**

1. Process for preparing highly dispersed, stable emulsions of the oil-in-water type, wherein

a) the quantity of emulsifier required for obtaining a stable emulsion is dispersed in 0.5 to 3 times the quantity by weight of water, relative to the weight of the emulsifier,

b) the quantity, to be emulsified, of the oily phase is introduced into this dispersion and homogenisation is then carried out under the action of high shear stresses until a uniform gel is formed,

c) the resulting gel is forced through a perforated disc, which has a plurality of holes of <10 mm diameter, into the remaining quantity of water and the emulsion thus formed is stirred, while avoiding high shear stresses, until the gel particles are completely dissolved.

2. Process according to Claim 1, characterised in that the process steps a) and b) are carried out at elevated temperatures.

3. Process according to Claim 1 or 2, characterised in that a perforated disc, the holes of which have a diameter of 1 to 3 mm, is used in process step c).